# EUROPÄISCHE PATENTSCHRIFT

(11) **EP 1 834 904 B1**
(45) Veröffentlichungstag und Bekanntmachung des Hinweises auf die Patenterteilung: **15.06.2011**
(21) Anmeldenummer: 06015541.3
(22) Anmeldetag: 26.07.2006
(51) Int. Cl.: B65G 15/62, B65G 21/20

(54) **Unterstützungseinrichtung für einen Bandförderer**
Support device for a conveyor belt
Dispositif de support pour un convoyeur à courroie

(30) Priorität: 13.03.2006 DE 102006011746
(43) Veröffentlichungstag der Anmeldung: 19.09.2007
(73) Patentinhaber: Blesinger, Thomas, 52428 Jülich (DE); Blesinger, Ludwig Stephan, 42389 Wuppertal (DE)
(72) Erfinder: Hoeps, Carsten, 52428 Jülich (DE)
(74) Vertreter: Castell, Klaus

(56) Entgegenhaltungen:
- FR-A1- 2 860 219
- GB-A- 2 059 900
- US-A- 5 915 527
- US-A1- 2002 038 757

## Beschreibung

Die Erfindung betrifft eine Unterstützungseinrichtung für einen Bandförderer zum Einsatz zwischen einem Förderband und einem Förderbandgestell.

Förderbänder laufen meist über eine angetriebene Rolle und eine Umlenkrolle. Zwischen der angetriebenen Rolle und der Umlenkrolle ist eine Auflage, die in der Regel möglichst eben ist, damit das Förderband einfach über die Auflage gleiten kann.

Beispielsweise für Schüttgüter sind Bandförderer bekannt, bei denen das Förderband quer zu seiner Längserstreckung eine Mulde bildet, in der die Schüttgüter transportiert werden können. Um mit dem Förderband eine derartige Mulde auszubilden, ist die Bandauflage muldenförmig ausgebildet. Das flexible Förderband liegt dann auf der muldenförmigen Auflage auf und es hat dadurch quer zur Bandförderrichtung eine konkave Form.

Um einen Bandförderer mit einem muldenförmigen bewegten Band herzustellen, genügt es in der Regel bei Bandförderern mit einer planen Bandauflage seitlich ein abgewinkeltes Blechelement einzuschieben, um die Seitenränder des Förderbandes nach oben zu drücken. Beidseitig des Förderbandes eingeschobene Blechunterstützungen führen zu einer V- oder U-förmigen Auflage für das Förderband, wodurch sich das darauf geführte Förderband muldenförmig verformt. Durch eine konkave Biegung der Bleche in den Bereichen, in denen das Förderband auf dem Unterstützungsblech aufliegt, kann eine abgerundete konkave Bandauflage erzielt werden. In der Regel werden jedoch nur die äußeren seitlichen Bereiche des Förderbandes durch Unterstützungsbleche leicht angehoben, damit in den Randbereich des Förderbandes geratene Schüttgüter nicht vom Förderband fallen.

Speziell gebogene Bleche werden in den Übergangsbereichen benötigt, in denen das seitlich angehobene Band zur Umlenkrolle gelangt. Sowohl an der angetriebenen als auch an der nicht angetriebenen Umlenkrolle muss das Förderband wieder zu einer planen Auflage überführt werden. In diesem Übergangsbereich werden dreieckig geformte Blechteile verwendet, deren Herstellung aufwendig ist, da sie eine spezielle Geometrie aufweisen müssen, die in der Regel viel Handarbeit erfordert. Gerade in diesen Umlenkbereichen soll ein möglichst kontinuierlicher Übergang von einer muldenförmigen Unterstützung des Bandes zum planen Auflagebereich im Bereich der Umlenkrolle erzielt werden. Die Herstellung derartiger Übergangsbleche ist kompliziert und aufwendig

Eine gattungsgemäße Unterstützungseinrichtung ist aus der US-A-5 915 527 bekannt.

Der Erfindung liegt die Aufgabe zugrunde, eine Unterstützungseinrichtung für einen Bandförderer zum Einsatz zwischen einem Förderband und einem Förderbandgestell derart auszubilden, dass sie leichter herstellbar ist.

Diese Aufgabe wird dadurch gelöst, dass eine gattungsgemäße Unterstützungseinrichtung ein Gussteil aufweist, das einen verjüngten Einschubbereich (3), eine plane Grundfläche und darüber eine in zwei zueinander senkrecht stehenden Richtungen schräge Bandauflage aufweist.

Die Herstellung zumindest eines Teils der Unterstützungseinrichtung als Gussteil ermöglicht eine einfache Massenanfertigung derartiger Unterstützungseinrichtungen und insbesondere die komplizierten Übergangsbereiche in der Nähe der Umlenkrollen können einmal optimal berechnet werden und anschließend besonders günstig in hohen Stückzahlen hergestellt werden. Als Material für das Gussteil eignet sich vor allem A-luminiumguss. Je nach Anwendungsfall können auch andere metallene Materialien, Porzellan oder Kunststoff vorteilhaft sein.

Ein Gussmaterial ermöglicht es, sanft geformte Übergange bereit zu stellen, auf denen das Förderband kontinuierlich abgestützt von einer Muldenform in eine ebene Form im Bereich der Umlenkrolle umgelenkt werden kann.

Besonders vorteilhaft ist es, dass das Gussteil einen verjüngten Einschubbereich aufweist. Ein verjüngter Einschubbereich ermöglicht es, einen Teil des Gussteils unter ein abgewinkeltes Blechteil zu schieben, um einen sanften Übergang von einem Blechteil auf das Gussteil zu schaffen und um das Gussteil gegebenenfalls auch am Blechteil befestigen zu können.

Insbesondere zur Befestigung des Gussteils an einem Blechteil wird vorgeschlagen, dass das Gussteil eine Bohrung im verjüngten Einschubbereich aufweist. Dies ermöglicht es, eine Schraube durch ein Blechteil in ein unter das Blechteil eingeschobenes Gussteil zu schrauben, um damit beispielsweise ein abgewinkeltes Blech mit dem im Übergangsbereich angebrachten Gussteil fest zu verbinden.

Eine besondere Ausgestaltung des Gussteils sieht vor, dass das Gussteil an einen Einschubbereich angrenzend eine zunächst nahezu eben verlaufende und anschließend zu einer schiefen Ebene auslaufende Bandauflage aufweist. Dies erlaubt es, im Übergangsbereich zwischen einem Blechwinkel und dem Gussteil durch eine ebene Führung des aufliegenden Bandes, das Band zu schonen, um es anschließend auf einer schiefen Ebene zur Umlenkrolle zu führen.

Um eine optimale Bandführung zu gewährleisten, weist das Gussteil eine plane Grundfläche und darüber eine in zwei zueinander senkrecht stehenden Richtungen schräge Bandauflage auf. Dies erlaubt es einerseits in einer Senkrechten zur Bandförderrichtung die Bandunterstützung zur Umlenkrolle hin zu reduzieren und andererseits in einer Richtung quer zur Bandförderrichtung die Bandunterstützung immer weiter auf die Randbereiche des Bandes zu reduzieren.

Vorteilhaft ist es, wenn die Unterstützungseinrichtung nicht nur ein Gussteil, sondern darüber hinaus ein Blechteil aufweist, da dadurch die langen Bandförderstrecken auf herkömmliche Art und Weise durch ein jeweils auf jeder Bandseite angeordnetes abgewinkeltes Blech unterstützt werden können.

Hierbei ist es vorteilhaft, wenn ein Bereich des Gussteils in das Blechteil einschiebbar ist. Dies erleichtert die Befestigung des Gussteils am Blechteil und erleichtert den Übergang im Bereich der Bandauflagefläche.

Eine besondere Ausgestaltung sieht vor, dass der einschiebbare Bereich des Gussteils in den Bereichen, in denen er am Blechteil anliegt, um die Dicke des Blechteils verringerte Außenabmessungen aufweist. Dadurch entsteht eine Stufe am Gussteil, in deren Bereich das Blechteil am Gussteil anliegt, um eine möglichst ebene Übergangsfläche als Auflagefläche für das Förderband zwischen Blechteil und Gussteil zu erreichen.

Eine feste Verbindung zwischen Blechteil und Gussteil wird dadurch erzielt, dass die Teile miteinander verschraubt sind. Eine Verschraubung ermöglicht auch ein einfaches Lösen der Verbindung, um das Förderband umzubauen oder abzubauen. Es versteht sich, dass je nach Einsatzzweck auch Nietverbindungen oder andere unlösbare Verbindungen zwischen Blechteil und Gussteil zur Herstellung einer Unterstützungseinrichtung verwendet werden können.

Die der Erfindung zugrunde liegende Aufgabe wird auch durch einen Bandförderer gelöst, der eine derartige Unterstützungseinrichtung als Förderbandauflage aufweist.

Ein Ausführungsbeispiel einer Unterstützungseinrichtung ist in der Zeichnung dargestellt und wird im Folgenden näher erläutert.

Es zeigt
- Figur 1: eine dreidimensionale Ansicht eines Gussteils einer Unter- stützungseinrichtung für einen Bandförderer,
- Figur 2: eine Seitenansicht des in Figur 1 gezeigten Gussteils,
- Figur 3: eine weitere Seitenansicht des in Figur 1 gezeigten Gussteils,
- Figur 4: eine Draufsicht auf das in Figur 1 gezeigte Gussteil und
- Figur 5: eine perspektivische Ansicht eines Blechteils als Teil einer Unterstützungseinrichtung für einen Bandförderer.

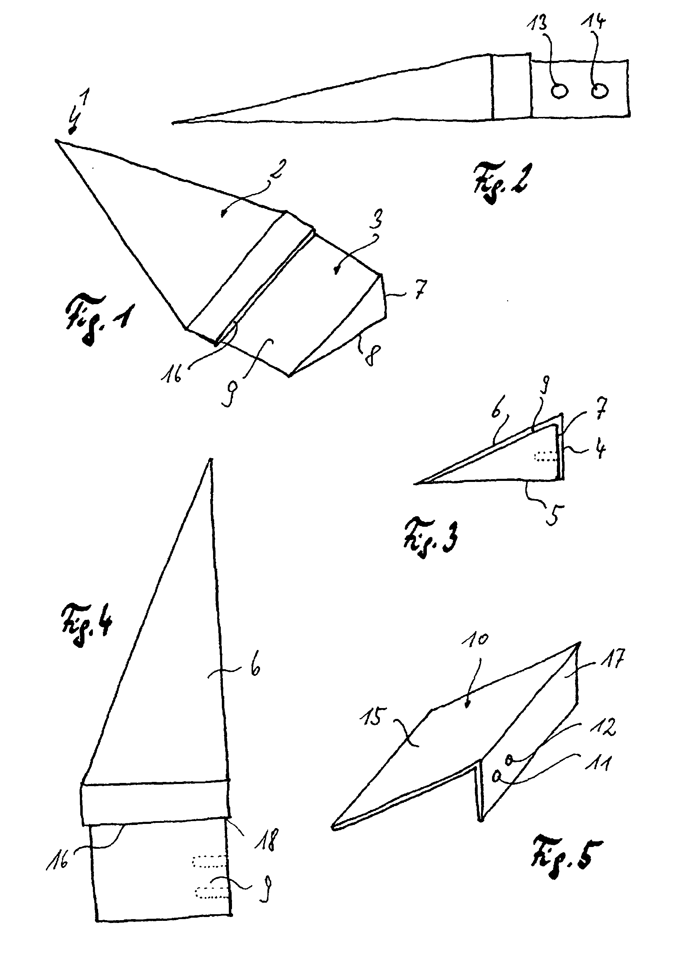

Die Unterstützungseinrichtung für einen Bandförderer besteht aus den in den Figuren 1 und 5 gezeigten Teilen, die miteinander verschraubt werden. Die Figur 1 zeigt ein Gussteil 1, das einen Auflagebereich 2 und einen Einschubbereich 3 aufweist. Der Auflagebereich 2 wird von einer dreiseitigen Pyramide gebildet, die zwei rechtwinklig zueinanderstehende Seiten 4 und 5 aufweist und eine schiefe Ebene 6. An die die Auflagefläche bildende Pyramide schließt sich ein im Querschnitt eine Dreiecksfläche bildender Körper als Einschubbereich 3 an. Auch der Einschubbereich 3 hat zwei rechtwinklig zueinander stehende Seiten 7 und 8, die eine Grundfläche und eine Seitenfläche bilden, sowie eine diesen Flächen gegenüberliegende Auflagefläche 9. Die Flächen 7 und 9 dienen dazu, hierauf ein Blechteil 10 aufzulegen. Das Blechteil 10 ist weit länger als der Einschubbereich 3 und es hat zwei Bohrungen 11 und 12, die bei eingeschobenem Gussteil 1 in das Blechteil 10 mit Bohrungen 13, 14 im Gussteil 1 fluchten. Die Oberseite 15 des Blechteils 10 bildet bei eingeschobenem Gussteil 1 zusammen mit der Oberseite 6 des Gussteils eine weitgehend stufenlose Auflagefläche für ein Förderband. Hierzu ist im Gussteil 1 zwischen dem pyramidenförmigen Teil 2 und dem Einschubbereich 3 eine Stufe 16 ausgebildet.

Ebenso geht die seitliche Oberseite 17 des Blechteils 10 in Folge einer Stufe 18 im Gussteil 1 im Wesentlichen ohne Absatz über in die Seitenfläche 4 des Gussteils 1.

Mit zwei Schrauben (nicht gezeigt) kann somit das Gussteil 1, nach dem es unter das Blechteil 10 geschoben worden ist, daran befestigt werden. Das Zusammenwirken von Blechteil 10 und Gussteil 1 bildet dadurch eine ohne Absatz ineinander übergehende Bandauflage mit der Auflagefläche 15 des Blechteils 10 und der Auflagefläche 6 des Gussteils 1. Während die Auflagefläche 15 des Blechteils 10 als ebene Auflagefläche ausgebildet ist und durch einfaches Abkanten des Blechteils 10 ausgebildet werden kann, bietet die im Gussteil 1 ausgebildete Auflagefläche 6 die Möglichkeit, je nach Formgebung des Gussteils eine spezielle Geometrie zu erzeugen, die es ermöglicht, ein auf der Auflagefläche aufliegendes Förderband ganz gezielt so zu führen, dass die seitliche Erhöhung des Bandes zur Umlenkrolle hin kontinuierlich unterstützt reduziert wird.

Zwei spiegelbildlich angelegte Gussformen ermöglichen die schnelle und preisgünstige Herstellung derartiger Bandauflageteile im Übergangsbereich zur Umlenkrolle und das Blechteil kann je nach Förderbandlänge individuell abgelängt sein. Eine genaue Abstimmung der Unterstützungseinrichtung auf die Förderbandlänge kann durch Langlöcher anstelle der Bohrungen 11 und 12 an der Seitenfläche des Blechteils 10 erreicht werden.

## Patentansprüche

1. Unterstützungseinrichtung für einen Bandförderer zum Einsatz zwischen einem Förderband und einem Förderbandgestell, ***dadurch gekennzeichnet, dass*** sie ein Gussteil (1) aufweist, das einen verjüngten Einschubbereich (3), eine plane Grundfläche und darüber eine in zwei zueinander senkrecht stehenden Richtungen schräge Bandauflage aufweist.

2. Unterstützungseinrichtung nach Anspruch 1, ***dadurch gekennzeichnet, dass*** das Gussteil (1) eine Bohrung (13, 14) im verjüngten Einschubbereich (3) aufweist.

3. Unterstützungseinrichtung nach einem der vorhergehenden Ansprüche, ***dadurch gekennzeichnet, dass*** das Gussteil (1) an einen Einschubbereich angrenzend eine zunächst nahezu eben verlaufende und anschließend zu einer schiefen Ebene auslaufende Bandauflage aufweist.

4. Unterstützungseinrichtung nach einem der vorhergehenden Ansprüche, ***dadurch gekennzeichnet, dass*** sie ein Blechteil (10) aufweist.

5. Unterstützungseinrichtung nach Anspruch 4, ***dadurch gekennzeichnet, dass*** ein Bereich (3) des Gussteils (1) in das Blechteil (10) einschiebbar ist.

6. Unterstützungseinrichtung nach Anspruch 4 und 5, ***dadurch gekennzeichnet, dass*** der einschiebbare Bereich (3) des Gussteils (1) in den Bereichen, in denen er am Blechteil (10) anliegt, um die Dicke des Blechteils (10) verringerte Außenabmessungen aufweist.

7. Unterstützungseinrichtung nach einem der Ansprüche 4 bis 6, ***dadurch gekennzeichnet, dass*** Gussteil (1) und das Blechteil (10) miteinander verschraubt sind.

8. Bandförderer, der eine Unterstützungseinrichtung nach einem der vorhergehenden Ansprüche als Förderbandauflage aufweist.

## Claims

1. Support device for a conveyor belt for insertion between a belt conveyor and a belt conveyor rack, ***characterized in that*** it has a cast part (1) that has a tapered insertion area (3), a plane base and a belt bearing above it, which is diagonal in two directions which are perpendicular to each other.

2. Support device according to claim 1, ***characterized in that*** the cast part (1) has a bore (13, 14) in the tapered insertion area (3).

3. Support device according to one of the afore-mentioned claims, ***characterized in that*** the cast part (1) has a belt bearing which is adjacent to an insertion area and runs at first almost planar and then on in an oblique plane.

4. Support device according to one of the afore-mentioned claims, ***characterized in that*** it has a sheet metal part (10).

5. Support device according to claim 4, ***characterized in that*** an area (3) of the cast part (1) is insertable into the sheet metal part (10).

6. Support device according to claim 4 and 5, ***characterized in that*** the insertable area (3) of the cast part (1) has external dimensions which are reduced to the thickness of the sheet metal part (10) in the areas in which it rests on the sheet metal part (10).

7. Support device according to one of the claims 4 to 6, ***characterized in that*** the cast part (1) and the sheet metal part (10) are screwed together.

8. Conveyor belt which has a support device according to one of the afore-mentioned claims as a belt conveyor bearing.

## Revendications

1. Dispositif de support pour un convoyeur à courroie pour insertion entre une courroie et un châssis, ***caractérisé en ce qu*'**il comprend une pièce moulée (1) qui comporte une zone d'insertion amincie (3), une surface de base plane et, au-dessus, un appui de courroie oblique dans deux directions perpendiculaires l'une à l'autre.

2. Dispositif de support selon la revendication 1, ***caractérisé en ce que*** la pièce moulée (1) comporte un alésage (13, 14) dans la zone d'insertion amincie (3).

3. Dispositif de support selon l'une quelconque des revendications précédentes, ***caractérisé en ce que*** la pièce moulée (1) comporte un appui de courroie adjacent à une zone d'insertion et orienté d'abord de manière presque plane, puis aboutissant sur une surface oblique.

4. Dispositif de support selon l'une quelconque des revendications précédentes, ***caractérisé en ce qu*'**il comprend une pièce en tôle (10).

5. Dispositif de support selon la revendication 4, ***caractérisé en ce* qu'**une zone (3) de la pièce moulée (1) est insérable dans la pièce en tôle (10).

6. Dispositif de support selon la revendication 4 et 5, ***caractérisé en ce que*** la zone (3) insérable de la pièce moulée (1) comporte des dimensions extérieures réduites correspondant à l'épaisseur de la pièce en tôle (10) dans les zones où elle vient en appui sur la pièce en tôle (10).

7. Dispositif de support selon l'une quelconque des revendications 4 à 6, ***caractérisé en ce que*** la pièce moulée (1) et la pièce en tôle (10) sont vissées l'une à l'autre.

8. Convoyeur à courroie comportant un dispositif de support selon l'une quelconque des revendications précédentes en tant qu'appui de courroie.
